# EUROPEAN PATENT SPECIFICATION

(11) **EP 0 548 196 B1**
(45) Date of publication and mention of the grant of the patent: **29.12.1997**
(21) Application number: 91916505.0
(22) Date of filing: 13.09.1991
(51) Int. Cl.: C22C 1/09, F16D 69/02, C23C 4/06

(54) **Metal matrix composite brake disc or like component**
Bremsescheibe oder ähnliche Bauteil aus Verbundwerkstoff mit metallmatrix
Disque de frein composite, ou élément semblable, à matrice métallique

(30) Priority: 14.09.1990 GB 9020182; 19.07.1991 GB 9115663
(43) Date of publication of application: 30.06.1993
(73) Proprietor: MURPHY, Martin John Michael, Hoggeston near Winslow, Buckinghamshire MK18 3LL (GB)
(72) Inventor: MURPHY, Martin John Michael, Hoggeston near Winslow, Buckinghamshire MK18 3LL (GB)
(74) Representative: Shaw, Laurence
(86) International application number: GB9101577
(87) International publication number: WO9205292

(56) References cited:
- FR-A- 1 417 823
- FR-A- 2 117 731
- FR-A- 2 375 442
- FR-A- 2 631 044
- GB-A- 2 003 935
- GB-A- 2 115 014
- GB-A- 2 164 711
- US-A- 3 755 059
- US-A- 3 902 864
- PATENT ABSTRACTS OF JAPAN vol. 10, no. 176 (M-491)(2232) 20 June 1986 & JP,A,61 024 877

## Description

The invention relates to a component such as a brake disc formed of a metal matrix composite i.e. a continuous metal phase reinforced with a disperse phase which may or may not be metal. The matrix may be formed of a metal such as aluminium, magnesium, titanium or an alloy based on any of these; the disperse phase may be in particulate, fibre or whisker form and selected from a wide range of materials such as silicon carbide, boron carbide, alumina, carbon, sand and other refractory fillers; wires of steel, copper or silver; and the like. A typical metal matrix composite comprises from about 10% to 40% by volume of silicon carbide in a continuous phase of an alloy of aluminium/magnesium/silicon or aluminium/copper or aluminium/lithium. Composites are of value because of lightness in weight coupled with strength and stiffness properties which are exerted even at high temperatures. Such composites can be made by a wide variety of techniques.

It has been observed that under certain conditions a brake disc component made of such a composite can fail to perform its intended function properly. The reasons for this are not clear but there is evidence to suggest that dispersed particles of the second material in the composite are displaced from their position in the matrix. There would be value in using a reliable brake disc made of a metal matrix composite because of the lightness in weight, strength, stiffness, wear resistance and like properties.

Disc brakes comprising a calliper and a disc have been widely adopted, particularly for automotive applications. The disc is squeezed during braking between pads of friction material, mounted in the calliper; and since the disc has a high resistance to compression, and since much of the disc is exposed and so can cool more quickly than for instance the drum of a drum brake, a disc brake is less prone than the drum brake to brake "fade" i.e. to partial loss of braking at high disc and/or pad temperatures, as may occur following intensive brake usage over a short period. It will also be of advantage to form other components of this material able to withstand similar conditions of use. Such components can be parts used in automotive, aerospace, aeronautic, machine tool, construction and like equipment.

It is one object of this invention to provide a component formed of a metal matrix composite, which component is able to withstand stresses induced in use. e.g. applied frictional forces.

According to the invention in one aspect there is provided a brake disc or like component formed of a metal matrix composite, the component having a protective coating on at least one surface thereof **characterised in that** the protective coating is a ceramic coating selected to prevent displacement of the reinforcing filler in the matrix when the component is placed under load and has a thickness of about 0.2 millimetres.

As indicated, one particular component is a brake disc which in use can be damaged by a brake pad and in this case the protective coating is selected to protect the surface against an applied abrasive force. In addition or alternatively the coating may be selected to provide corrosion resistance, hardness, wear resistance, compatibility or other properties. Depending on the intended use, the coating may be selected to have thermal properties, e.g. conductivity.

Most preferably, the protective coating is applied by electroplating, plasma deposition, magnetron sputtering or a like technique.

The coating is a ceramic e.g. alumina. Reinforcing fibres e.g. silicon carbide carbon may be present. The coating will be chosen to be compatible with the component, e.g. to have a rate of linear heat expansion substantially the same as that of the composite of the brake disc component to avoid the risk of debonding at service temperature.

The metal matrix composite may be selected from any of the available such materials. The density may range from about 2.5 to about 3.1 gm/cm³, dependant on the materials selected.

A brake disc of the invention can be used with a wide range of available brake pads without undergoing damage in use. As a result, commercially available brake pads can be used without modification. The discs may be used at the front and/or rear of a vehicle, including a racing vehicle.

The invention will be further described by way of example with reference to the accompanying diagrammatic drawing in which:
Figure 1 is a cross-sectional view of a typical disc for use in a disc brake; and
Figure 2 is an enlarged section of a circled portion of Figure 1.

The vehicle brake disc 10 is of generally "top-hat" form, with a mounting bell portion 11 adapted to be secured to rotate with a vehicle wheel; in an alternative embodiment the disc can be mounted to rotate with the vehicle propshaft and may be ventilated. The bell and disc are held together in known manner, e.g. by bolts and nuts, not shown.

Friction pads A,B are movable into engagement with opposed side faces 10a, 10b of disc 10, to effect braking of the disc. During such engagement if the disc is rotating, high temperatures are generated at the disc surfaces, which may have therefore a frictionally induced surface temperature exceeding 400°C.

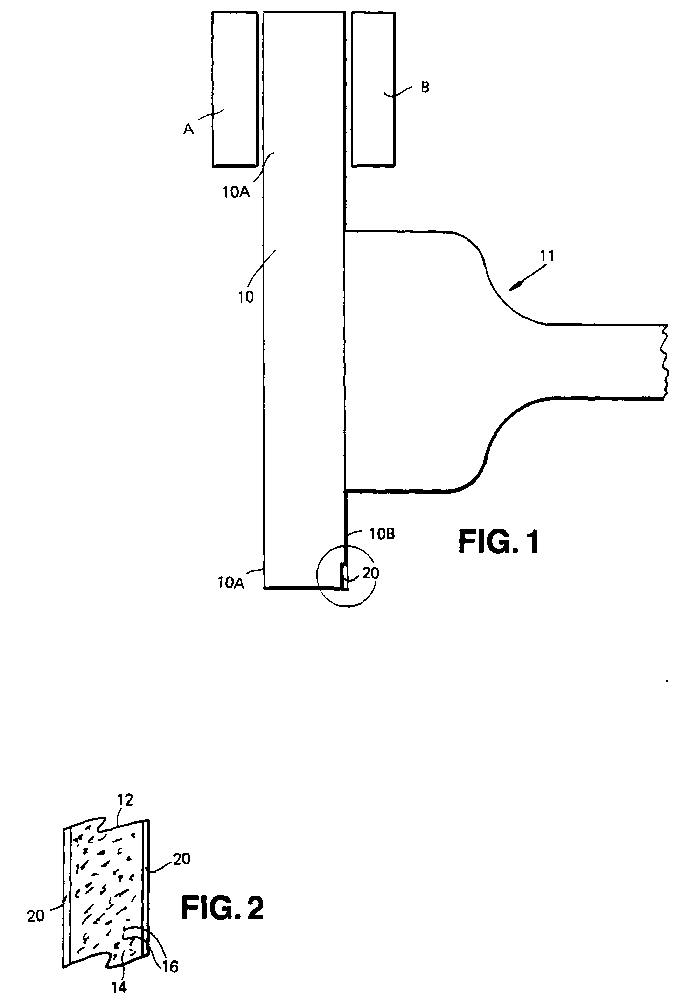

The disc 10 comprises a body portion 12, formed of a metal matrix composite with a coating applied by a plasma spray technique. METCO 449 is one commercially available sprayable material. As shown in Figure 2, disc 10 is of an aluminium alloy body 14 with particulate silicon carbide 16 therein, randomly but evenly distributed. The density of the matrix is about 2.76 gm/cm³. The plasma sprayed coating 20 is applied to a depth sufficient to protect the underlying metal matrix composite, typically about 0.2 millimetre, and so as to prevent any particles 16 standing proud of the surface from contacting the pad A,B in use and causing damage thereto.

## Claims

1. A brake disc or like component formed of a metal matrix composite, comprising a continuous metal phase reinforced with a disperse phase, the component having a protective coating on at least one surface thereof **characterised in that** the protective coating is a ceramic coating selected to prevent displacement of the reinforcing filler in the matrix when the component is placed under the load and has a thickness of 0.2 millimetres.

2. A component according to Claim 1 in which the protective coating comprises alumina.

3. A component according to Claim 1 or 2, in which the density of the composite is from 2.5 to 3.1gm/cm³.

4. A component according to Claim 1 or 2, comprises a brake disc having the protective coating formed on opposite faces thereof.

## Patentansprüche

1. Eine Bremsscheibe oder ein ähnliches aus einem Metallmatrix-Verbundwerkstoff geformtes Element, bestehend aus einer mit einer Dispersionsphase verstärkten kontinuierlichen Metallphase, wobei das Element eine Schutzbeschichtung auf mindestens einer dieser Flächen aufweist, **dadurch gekennzeichnet, daß** die Schutzbeschichtung eine Keramikbeschichtung ist, die, bei Belastung des Elements, eine Verdrängung des verstärkenden Füllstoffes in der Matrix verhindert und die eine Dicke von 0,2 Millimeter aufweist.

2. Ein Element gemäß Anspruch 1, wobei die Schutzbeschichtung aus Aluminiumoxid besteht.

3. Ein Element gemäß Anspruch 1 oder 2, wobei die Dichte des Verbundwerkstoffes zwischen 2,5 und 3,1 gm/cm³ liegt.

4. Ein Element gemäß Anspruch 1 oder 2, bestehend aus einer Bremsscheibe, bei der die Schutzbeschichtung auf gegenüberliegenden Seiten angeordnet ist.

## Revendications

1. Un disque de frein ou composant semblable formé à partir d'un composite à matrice en métal, comprenant une phase métal continue renforcée avec une phase de dispersion, le composant ayant un revêtement de protection sur au moins une surface de ce dernier caractérisé en ce que le revêtement de protection est un revêtement céramique sélectionné pour empêcher le déplacement du remplissage de renforcement dans la matrice lorsque le composant est mis sous charge et a une épaisseur de 0,2 millimètre.

2. Un composant conformément à la revendication 1 dans lequel le revêtement de protection se compose d'alumine.

3. Un composant conformément à la revendication 1 ou 2 dans lequel la densité du composite est comprise entre 2,5 et 3,1 g/cm³.

4. Un composant conformément à la revendication 1 ou 2 se compose d'un disque de frein ayant le revêtement de protection formé sur des faces opposées de ce dernier.
